# EUROPEAN PATENT SPECIFICATION

(11) **EP 2 686 227 B1**
(45) Date of publication and mention of the grant of the patent: **19.02.2020**
(21) Application number: 12757530.6
(22) Date of filing: 14.03.2012
(51) Int. Cl.: B62K 25/28

(54) **BICYCLE**
FAHRRAD
VÉLO

(30) Priority: 14.03.2011 US 201161452423 P
(43) Date of publication of application: 22.01.2014
(73) Proprietor: CMH Plus Holdings Ltd., Nanaimo, British Columbia V9R 6T4 (CA)
(72) Inventor: HUDEC, Christopher, Nanaimo, British Columbia V9R 6T4 (CA)
(74) Representative: Appleyard Lees IP LLP
(86) International application number: PCT/CA2012/000236
(87) International publication number: WO 2012/122634

(56) References cited:
- WO-A1-99/10224
- WO-A1-2008/025950
- GB-A- 2 454 021
- US-A- 5 957 473
- US-A1- 2004 046 355
- US-A1- 2005 184 483
- US-A1- 2005 285 367
- US-A1- 2008 238 030
- US-A1- 2008 277 900
- US-A1- 2009 315 296
- US-B1- 7 556 276
- US-B1- 7 658 394

## Description

### Field of the Invention

The present invention relates to a bicycle having a suspension system, namely a rear suspension system.

### Background of the Invention

A bicycle frame is the main component of a bicycle, on to which wheels and other components are fitted. The great majority of today's rigid-frame bicycles have a frame with upright seating. Such upright bicycles generally feature the diamond frame, a truss consisting of two triangles: the front triangle and the rear triangle. In a conventional diamond frame, the front "triangle" is not actually a triangle because it consists of four tubes: the head tube, top tube, down tube and seat tube. The head tube contains the headset, the set of bearings that allows the front fork (which supports the front wheel) to turn smoothly for steering and balance. The top tube connects the head tube to the seat tube at the top, and the down tube connects the head tube to the bottom bracket. The rear triangle consists of the seat tube and paired chain stays and paired seat stays. The chain stays run essentially parallel to the chain, connecting the bottom bracket to the rear fork ends (which support the rear wheel). The seat stays connect the top of the seat tube (at or near the same point as the top tube) to the rear fork ends.

Many modern bicycles do not utilize a diamond frame, for example because: the frame is constructed in such a way that it does not consist of tubes attached one to another (for example, frames made of composite materials); or the frame involves a rear suspension system permitting rearward components of the bicycle (e.g., the rear wheel) to move relative to other components of the bicycle (e.g., the seat); or both. However, the terms used to describe the members of a conventional diamond frame (being, head tube, top tube, down tube, seat tube, chain stays and seat stays) are often used to describe analogous features on non-diamondf rames and are at times so used herein.

Most bicycles use a chain to transmit power to the rear wheel. The drivetrain begins with pedals which rotate the cranks, which are attached to a spindle that rotates within the bottom bracket. With a chaindrive, a chainring attached to a crank drives the chain, which in turnr otates the rear wheel via a rear sprocket. Most chaindrive systems have some form of gearing, t ypically comprising multiple rear sprockets of different sizes, multiple chainrings of different sizes and user controllable devices (referred to as derailleurs) for moving the chain between rear sprockets and between the chainrings, so as to selectively vary the gear ratio. In chain drive systems, the portion of chain extending between the top of a chainring and the top of a rear sprocket conveys the motive force from the pedals to the rear wheels. When the rider is pedalling, this top portion of chain is under tension. In a bicycle without a rear suspension, this chain tension is resisted by the rigid frame (e.g., the rear triangle) to which the rear wheel is mounted. However, in a bicycle with a rear suspension system, some portion of the force of such chain tension may be imparted to the suspension system. As well, movement of the rear suspension system relative to the bottom bracket may dynamically tension or slacken the portion of chain extending between the top of a chainring and the top of a rear sprocket, thereby affecting the pedalling resistance experienced by the rider. The direction of the force conveyed along the portion of chain extending between the top of a chainring and the top of a rear sprocket is referred to as the chain line. A further complication is that bicycles typically have multiple chainrings and multiple rear sprockets so as to provide rider selectable gear ratios; in the result, most bicycles would not have a single chain line, but rather would have multiple chain lines.

A bicycle suspension is the system or systems used to suspend the rider and all or part of the bicycle in order to protect them from the roughness of the terrain over which they travel. Bicycle suspensions are used primarily on mountain bikes, but are also common on hybrid bicycles, and can even be found on some road bicycles. Bicycle suspension can be implemented in a variety of ways, including: front-fork suspension and rear suspension. It is not uncommon for a mountain bike to have front suspension but no rear suspension (such a suspension configuration is often referred to as a hardtail). However, it is uncommon for a mountain bike to have a rear suspension system but no front suspension system. Thus, rear suspension systems on mountain bikes are typically part of a full suspension system.

Suspension systems for mountain bikes first appeared in roughly the early 1990's. Over the ensuing years developers and users of mountain bike suspension systems recognized a variety of factors affecting suspension performance and general riding performance of suspension system, which factors are interrelated in dynamic and complex ways. It was soon realized that the fact that bicycles are powered by human effort means that effects on the drive train caused by suspension system movement that would, in the case of engine driven vehicles, be minor or unnoticeable, are significant in bicycles. Early full suspension frames were heavy and tended to bounce up and down while a rider pedaled. This movement was called pedal bob, kickback, or monkey motion and reduced the efficiency of, or interfered with, a rider's pedal stroke - especially during climbs up steep hills. Input from hard braking efforts often also negatively affected the performance of early full suspension designs. When a rider hit the brakes (which often occurs in terrain situations in which the rear suspension is needed most), some early suspension designs tended to extend the shock (known as brake jack), causing a stiffening of the suspension, which tends to not allow the suspension to react to bumps very well. Some suspension designs exhibit brake squat, where braking forces tend to compress the suspension. This effect, in moderation, can be beneficial to counteract the normal forward weight transfer caused by braking.

In the field of bicycle suspension systems, the following terms are generally used as follows:
Travel refers to how much movement a suspension mechanism allows. It usually measures how much the wheel axle moves.
Bob and squat refer to how a suspension, usually rear, responds to rider pedalling. Squat usually refers to how the rear suspension compresses under acceleration, and bob refers to repeated squat and rebound with each pedal stroke. Both are undesirable characteristics as they rob power from pedalling.
Pedal feedback or chainstay lengthening refers to torque applied to the crankset by the chain caused by motion of the rear axle relative to the bottom bracket. Pedal feedback is caused by an increase in the distance between the chainring and rear sprocket, and it can be felt by the rider as a torque on the crankset in the rotational direction opposite to forward pedalling. A certain amount of a tendency for chainstay lengthening related to pedalling-induced suspension extension, may be useful in that it may counteract the rearward weight shift of the rider and resulting compression of the rear suspension due to acceleration forces. That is, with suspension systems featuring such chainstay lengthening related to pedalling-induced suspension extension, vigorous pedalling tends to stiffen the suspension. This resistance to the weight shift of the rider and compression of the rear suspension is called anti-squat. Too much anti-squat or chainstay lengthening results in resistance to compression of the suspension due to pedal forces when the rear wheel hits an obstacle. Likewise, bump forces are transmitted through the pedals to the rider. In other words, too much chainstay lengthening either reduces the ability of the suspension to react to irregular terrain, or is felt by the rider as movement of the pedals.
Preload refers to the force applied to spring component before external loads, such as rider weight, are applied. The amount of preload necessary depends on the rider weight and the parameters of the spring components. More preload makes the suspension sag less and less preload makes the suspension sag more. Adjusting preload affects the ride height of the suspension.
Rebound refers to the rate at which a suspension component returns to its original configuration after absorbing a shock. The term also generally refers to rebound damping or rebound damping adjustments on shocks, which vary the rebound speed. More rebound damping will cause the shock to return at a slower rate.
Sag refers to how much a suspension moves under just the static load of the rider. Sag is often used as one parameter when tuning a suspension for a rider. Spring preload is adjusted until the desired amount of sag is measured. Nearly all rear suspension systems operate optimally with sag set somewhere between 20-35% of the total suspension travel, depending on the rider's preference and the suspension design. Sag allows the rear wheel to drop into depressions in the terrain, maintaining traction.
Lockout refers to a mechanism to disable a suspension mechanism to render it substantially rigid. This may be desirable during climbing or sprinting to prevent the suspension from absorbing power applied by the rider. Some lockout mechanisms also feature a "blow off" system that deactivates the lockout when an appropriate force is applied to help prevent damage to the shock and rider injury under high unexpected loads.
Compression damping refers to systems that slow the rate of compression in a front fork shock or rear shock. Compression damping is usually accomplished by forcing a hydraulic fluid (such as oil) through a valve when the shock becomes loaded. The amount of damping is determined by the resistance through the valve, a higher amount of damping resulting from greater resistance in the valve. Many shocks have compression damping adjustments which vary the resistance in the valve. Often, lockouts function by allowing no hydraulic fluid to flow through the compression damping valve.
Unsprung mass is the mass of the portions of bicycles that is not supported by the suspension systems.

Numerous bicycle systems and variations of same are known. For example, as described in the following US patents:
- 4,789,174, Suspension Bicycle, Lawwill, 6 December 1988;
- 5,121,937, Suspension Bicycle, Lawwill, 16 June 1992;
- 5,205,575, Cycle Rear Suspension System, Buell et al., 27 April 1993;
- 5,244,224, Rocker Arm Rear Suspension Bicycle, Busby, 14 September 1993;
- 5,441,292, Bicycle Rear Suspension System, Busby, 15 August 1995;
- 5,509,679, Rear Suspension For Bicycles, Leitner, 23 April 1996;
- 5,553,881, Bicycle Rear Suspension System, Klassen et al., 10 September 1996; - 5,628,524, Bicycle Wheel Travel Path For Selectively Applying Chainstay Lengthening Effect And Apparatus For Providing Same, Klassen et al., 13 May 1997;
- 5,899,480, Rear Suspension For Bicycles, Leitner, 4 May 1999;
- 6,099,010, Bicycle With Crank Assembly Suspension System, Busby, 8 August 2000;
- 6,206,397, Bicycle Wheel Travel Path For Selectively Applying Chainstay Lengthening Effect And Apparatus For Providing Same, Klassen et al., 27 March 2001;
- 6,843,494, Rear Suspension System For Two-Wheeled Vehicles, Particularly Bicycles, Lam, 18 January 2005;
- 6,969,081, Bicycle Rear Suspension, Whyte, 29 November 2005;
- 7,048,292, Bicycle Suspension Systems, Weagle, 23 May 2006;
- 7,066,481, Bicycle Rear Suspension, Soucek, 27 June 2006;
- 7,100,930, Bicycle Rear Suspension System, Saiki, 5 September 2006;
- 7,128,329, Vehicle Suspension Systems, Weagle, 31 October 2006;
- 7,240,912, Bicycle Rear Suspension, Whyte, 10 July 2007;
- 7,296,815, Bicycle Suspension Apparatus and Related Method, Ellsworth et al., 20 November 2007;
- 7,392,999, Bicycle With Rear Suspension, O'Connor, 1 July 2008;
- 7,494,146, Bicycle Frame, Tseng, 24 February 2009;
- 7,556,276, Bicycle Rear Wheel Suspension Chassis, Dunlap, 7 July 2009;
- 7,581,743, Bicycle Rear Wheel Suspension System With Controlled Variable Shock Rate, Graney, 1 September 2009;
- 7,635,141, Bicycle Rear Suspension System, O'Connor, 22 December 2009;
- 7,658,394, Rear Suspension Systems For Bicycles, Huang, 9 February 2010;
- 7,712,757, Suspension For Mountain Bicycles, Berthold, 11 May 2010;
- 7,717,212, Vehicle Suspension Systems For Separated Acceleration Responses, Weagle, 18 May 2010;
- 7,828,314, Vehicle Suspension Systems, Weagle, 9 November 2010; and
- 7,934,739, Bicycle Rear Suspension, Domahidy, 3 May 2011.

Further examples of bicycle systems and variations of same are described in the following US patent applications:
- US2005/0057018, Bicycle Rear Suspension System, Saiki, 17 March 2005;
- US2008/0054595, Bicycle Frame With A Counter-Rotating Four Bar Linkage System; Lu, 6 March 2008;
- US2008/0067772, Vehicle Suspension Systems For Separated Acceleration Responses, Weagle, 20 March 2008;
- US2008/0217882,Two-W heeled Vehicle With Rear Suspension, Beaulieu etal., 11 September 2008;
- US2008/0252040, Bicycle Rear Wheel Suspension System, Colegrove et al., 16 October 2008;
- US2008/0258425, Rear Fork For Bicycle, Tribotte, 23 October 2008;
- US2008/0277900, Bicycle With A Common Pivot Shock Absorber, I, 13 November 2008;
- US2009/0026728, Bicycle Rear Suspension, Domahidy, 29 January 2009;
- US2009/0072512, Bicycle Rear Suspension System, Earle, 19 March 2009;
- US2009/0261556, Bicycle Rear Suspension System Linkage, Beale, 22 October 2009;
- US2009/0283986, Rear Fork, Falke, 19 November 2009;
- US2010/0007113, Rear Suspension System For Bicycles, Earle et al., 14 January 2010;
- US2010/0059965, Bicycle Suspension System Employing Highly Predictable Pedalling Characteristics, Earle, 11 March 2010;
- US2010/0102531, Bicycle Rear Suspension System With Controlled Variable Shock Rate, Graney, 29 April 2010;
- US2010/0127473, Suspension Bicycle Derailleur Link, Cocalis et. al., 27 May 2010;
- US2010/0156066, Mountain Bicycle Having Improved Frame Geometry, O'Connor, 24 June 2010;
- US2010/0327556, Bicycle Assembly With Rear Shock, Chamberlain, 30 December 2010; and
- US2011/0115181, Vehicle Suspension Systems, Weagle, 19 May 2011;

As illustrated in the following discussion of some types of prior-art suspensions, rear suspension systems involve complicated interactions of multiple connected components and multiple performance considerations.

One of the simplest and most common bicycle suspension designs is the single-pivot system, in which the rear wheel of the bicycle is attached to the main frame of the bicycle by a single swingarm (often a generally triangular component and often referred to as the rear triangle) pivoting about a pivot located on the main triangle. In simple terms, a lower forward corner of the rear triangle is pivotally attached to the main frame, a lower rearward corner houses the rear wheel axle, and the third upward corner actuates a shock absorber interposed between the third upward corner and the main frame. The pivotal attachment between the rear triangle and the main frame is located above the bottom bracket shell. With the single-pivot design, the rear wheel absorbs bumps from irregular terrain by moving in a simple curve (i.e., a circular arc) about the pivot.

With single-pivot suspensions, pedalling forces tend to extend or compress the rear suspension, depending on whether the pivot is above or below the chain line. Likewise, when a single-pivot suspension system compresses when hitting an obstacle on the trail, or extends when riding over a depression in the ground surface, unwanted forces are exerted on the bicycle riders legs through the pedals. In single-pivot designs in which the pivot is below the chain line, pedalling induced chain tension translates into a force tending to pull the swingarm upwards (i.e., tending to compress the suspension); and by the same token, terrain-induced compression and extension of the suspension tend to dynamically affect chain tension, with compression decreasing chain tension and extension increasing chain tension (i.e., chainstay lengthening), both of which affect the pedalling resistance experienced by the rider. By contrast, in single-pivot designs in which the pivot is above the chain line, pedalling induced chain tension translates into a force tending to pull the swingarm downwards (i.e., tending to extend the suspension); and, again, terrain-induced compression and extension of the suspension tend to dynamically affect chain tension, with compression increasing chain tension (i.e., chainstay lengthening) and extension decreasing chain tension, both of which again affect the pedalling resistance experienced by the rider.

Generally, the greater the amount of suspension system travel in a single-pivot suspension, the greater these pedalling-induced and terrain-induced effects. Configuring a single-pivot suspension so as to provide desirable amounts of chainstay lengthening (i.e., anti-squat for efficient pedalling), results in too much chainstay lengthening when the suspension system is fully compressed. Lowering the pivot to reduce the total amount of chainstay lengthening when the suspension is fully compressed results in power loss when pedalling, because pedalling forces act to compress the suspension. Shock absorber damping was introduced to reduce the suspension motion induced by pedalling forces. However, shock damping may be effective in resisting unwanted movement of a suspension, but damping also reduces the ability of the suspension to absorb bumps. Therefore, typically with single-pivot suspension systems, some of the rider's energy is expended needlessly compressing or extending the suspension, the effectiveness of the suspension is reduced by damping on the shock, and some amount of the rider's energy is dissipated in the shock absorber.

More complicated suspension designs were developed in an attempt to overcome some or all of the single-pivot systems' performance shortcomings. All such suspension systems use a configuration of linkages that is more complicated than a mere single pivot and that generally provide for an axle path of travel during suspension compression and extension that is other than the simple curve about the pivot point achievable with the single-pivot suspensions.

For example, Lawwill WO 99/10224 A1 discloses a relatively early four-bar linkage configuration that has been superseded by subsequent developments in the field.

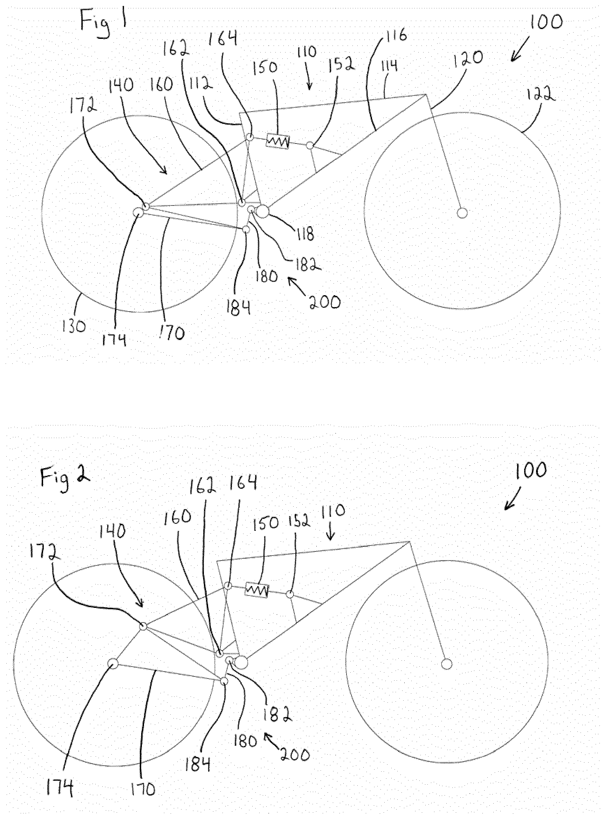

Another example is McGrath GB 2,454,021 A, which discloses a suspension system having a relatively short link between the bicycle frame and a chain stay. The general configuration disclosed in McGrath apparently produced significant undesirable chainstay lengthening, such that an additional component, essentially an idler wheel, is a preferred part of the system. The partial paragraph at the top of page 5 of McGrath reads in part: "Preferably a pivot jockey assembly 41, would be mounted to the main frame to prevent chain deraillement and to minimise the effects of the increasing length of the chain stay 70, (as shown in Figure 2) when moving through its travel."

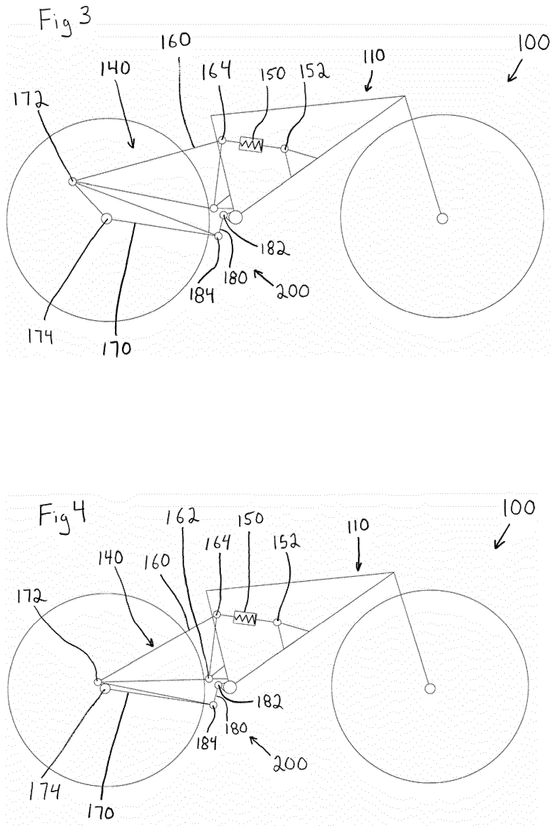

A popular linkage suspension design is shown in Figure 3 in U.S. Pat. No. 5,899,480 (commonly referred to as a Horst Link suspension system after the inventor, Horst Leitner). The Horst Link suspension system comprises four pivotally connected linkage members. The first linkage member is the front triangle of the bicycle. The second linkage member is a long swingarm similar to a single pivot's swingarm (i.e., analogous to a chainstay). The third linkage member is analogous to seatstays. The fourth linkage member is located between the third linkage member (i.e., the seatstays) and the first linkage member (i.e., the front triangle). The rear wheel is mounted at the lower end of the seatstays The Horst Link suspension is intended to reduce the amount by which pedalling forces actuate the suspension (and likewise reduce feedback from suspension movement to the pedals) by distributing pedalling forces across both the lower swingarm and the third linkage member.

However, to achieve this goal, the chainstay/swingarm pivot on the front triangle is typically located lower and closer to the bottom bracket, as compared to single-pivot suspension systems. It's in this location to take advantage of the fact that since pedalling forces affect suspension movement less, a low main pivot location does not result in pedal forces compressing the suspension system as much as in single pivot locations. This allows the suspension to move more freely when pedalling forces are applied, and likewise results in less feedback to the rider's legs when the suspension is compressed. These effects are a result of the low main pivot location, which reduces the amount of chainstay lengthening. If a higher main pivot location is employed to achieve an advantageous amount of chainstay lengthening, the path of the rear axle is up and away from the bottom bracket as in single-pivot suspension systems, resulting in too much chainstay lengthening when the suspension is fully compressed.

Because typical Horst Link suspension systems are designed to reduce pedalling effects on the suspension, they generally do not provide the benefit associated with chainstay lengthening (i.e., anti-squat). Since suspension stiffening by way of chainstay lengthening is minimal or non-existent, the acceleration-induced weight shift of the rider toward the rear of the bicycle compresses the rear suspension, resulting in loss of the rider's energy. In practice, many Horst Link suspension designs use a shock absorber with damping to reduce compression of the suspension due to acceleration forces, reducing the ability of the suspension to react to bumps or depressions in the trail.

Dual short-link designs are a popular type of four-bar linkage suspension systems comprising two short links interposed between the bicycle main frame and a rigid rear triangle to which the rear wheel is mounted. A characteristic of dual short-link designs is that they use the relatively high angular velocity of the short links to manipulate the path of the rear axle during suspension compression and extension. However, the relatively high angular velocity of the short links also tends to induce rapid rates of change in the shock leverage ratio. This means that the shock is compressed at varying rates while the rear wheel moves at a constant rate. This discontinuity complicates suspension design; if the rate of change of leverage ratio is too rapid, or the difference between the highest and lowest leverage ratio is large, suspension performance suffers.

To compensate for rapidly changing leverage rates, dual short-link designs are typically configured to provide: a specific amount of sag when the suspension is statically loaded, and a shock absorber finely tuned to match the rear suspension's leverage ratio changes. If sag is not set correctly on dual short-link suspension bikes, the shock absorber is "out of tune"with the leverage ratio applied by the dual short links, and the suspension will not operate optimally. Part of that "tuning" can include not using the first third of suspension travel during the compression stroke, which avoids one part of the rapidly changing leverage rate applied to the shock absorber. By ignoring the first third of the suspension travel, suspension designers can "hide" poorly performing parts of the shock leverage ratio curve, where it is thought by some to have minimal adverse effects on suspension travel.

Dual short-link bikes often do not use sag to full advantage. In practice, many riders cannot or do not set the sag exactly, resulting in sub-optimal performance of the dual short link suspension.

The first widely successful dual short link design is called the Virtual Pivot Point suspension (orVPP), disclosed in U.S. Patent No. 6,206,397. This suspension system employs two short linkages (e.g., linking members, pairs of crank linkages etc.) that move in "opposite directions" so as to manipulate the rear wheel axle path into an S-curve. This design uses chain tension to "hold" the rear axle at its sag point, or the point where the chainstays are at their "shortest length". Chainstay lengthening occurs both above and below the sag point. As a result, in the VPP design, chain tension impedes suspension extension so as to impede the rear wheel from dropping into depressions in the terrain, which may adversely affect traction of the rear wheel over irregular terrain.

A dual short link design that employs links pivoting in the same direction is disclosed in U.S. Patent No. 7,128,329 (Weagle). This design uses anti-squat properties generated by large amounts of chainstay lengthening to counteract the rearward weight shift and resulting compression of the suspension due to acceleration forces. By focusing on anti-squat behavior throughout the suspension travel, this design essentially has an up and rearward axle path through the majority of its travel. This causes chainstay lengthening throughout most of the travel, resulting in excessive chain growth and chain growth's associated problems, similar to high-pivot single-pivot designs.

Many of the patented dual short link suspension designs featuring two short links rotating in the same direction emulate the function of Weagle's or the VPP designs in various ways, but differ with respect to the placement, length and pivot locations of the two short links. The chainstay lengthening effects are derived from the placement of the links and pivot points. However, by emulating Weagle's or the VPP design, the majority of dual short-link designs have similar performance issues as single pivot designs, relying on a specific amount of suspension sag, not taking full advantage of suspension sag, and highly variable shock leverage ratios.

Arraiz WO 2008/025950 discloses a "Virtual Pivot Point" (or VPP) suspension, i.e., a four-bar linkage suspension with relatively short links connecting the rear triangle to the frame.

A suspension design that illustrates the variety of performance considerations that influence innovation in the field of bicycle rear suspensions is the design described in U.S. Patent No. 7,556,276 (Dunlap), which is directed to performance considerations completely difference from those discussed above (e.g., chainstay lengthening, anti-squat etc.). As set out in the Summary of Invention section of the Dunlap patent, the Dunlap design is primarily aimed at lowering the center of gravity of the bicycle and providing a skid plate that helps to actuate the rear wheel.

### Summary of the Invention

It is an object of the present invention to overcome at least one of the above or other disadvantages. According to the present invention there is provided a bicycle according to claim 1. Preferred embodiments of the present invention are laid down in the appended dependent claims.

There now follows a summary of various aspects and advantages according to embodiments of the invention. This summary is provided as an introduction to assist those skilled in the art to more rapidly assimilate the detailed discussion herein and is not intended in any way to limit the scope of the claims that are appended hereto.

According to an embodiment of the present invention there is provided a bicycle as described in independent claim 1.

The angle may be about 45 degrees to about 100 degrees. The angle may be about 45 degrees to about 78 degrees.

The location of the pivot axis of the couple for pivotally coupling to the seat stay member may be at a radial distance from the rear wheel axis of rotation of about 30 mm to about 200 mm. The radial distance may be about 50 mm to about 150 mm.

In terms of the X,Y coordinate system, the location of the pivot axis of the link pivotal attachment (182) to the bicycle frame (110) may be with X between about -90 mm and about 120 mm, and Y between about -60 mm and about 120 mm; and the location of the pivot axis of the link pivotal coupling (184) to the frame-ward end may be with X between about -90 mm and about 40 mm and Y between about -110 mm and about 70 mm.

In terms of the X,Y coordinate system, the location of the pivot axis of the link pivotal attachment (182) to the bicycle frame (110) may be with X between about -90 mm and about 80 mm and Y between about -90 mm and about 80 mm; and the location of the pivot axis of the link pivotal coupling (184) to the frame-ward end may be with X between about -65 and about 100 mm, and Y between about -75 mm and about 75 mm.

The shock absorber device may be interconnected between the seat stay member and the bicycle frame.

### Summary of the Drawings

Figures 1 - 16 are schematic right-side elevation views of examples having links with the links in the clockwise pivoting configuration.

Figures 17 - 48 are schematic right-side elevation views of examples having links with the links in the counter-clockwise pivoting configuration.

Figures 1 to 48, in each of them is illustrated a bicycle which does not belong to the present invention, are provided to explain the invention only. The specific X,Y coordinates of the configurations illustrated in Figures 1 to 48 are generally proximate to, but are not within, the ranges required by the claims.

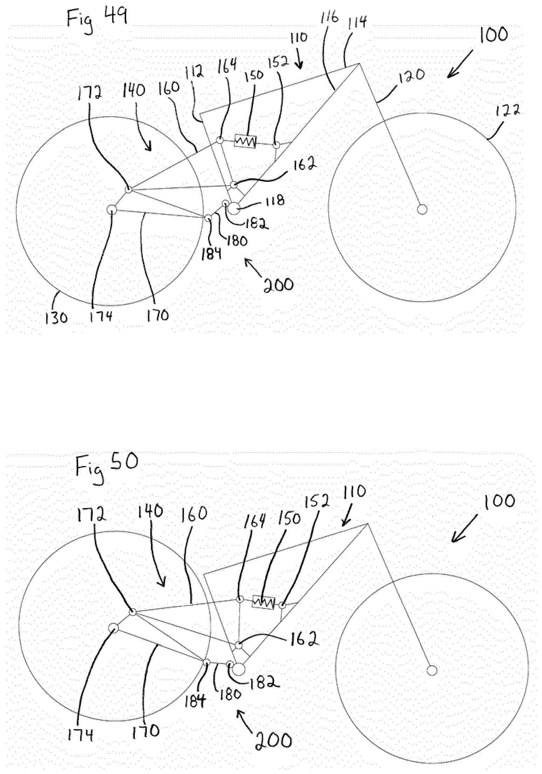

Figure 49 is a schematic right-side elevation view of an embodiment of the present invention having a link with the link in the clockwise pivoting configuration, shown in the un-loaded "at rest" position.

Figure 50 is a schematic right-side elevation view of the embodiment of Figure 49, shown in a compressed position.

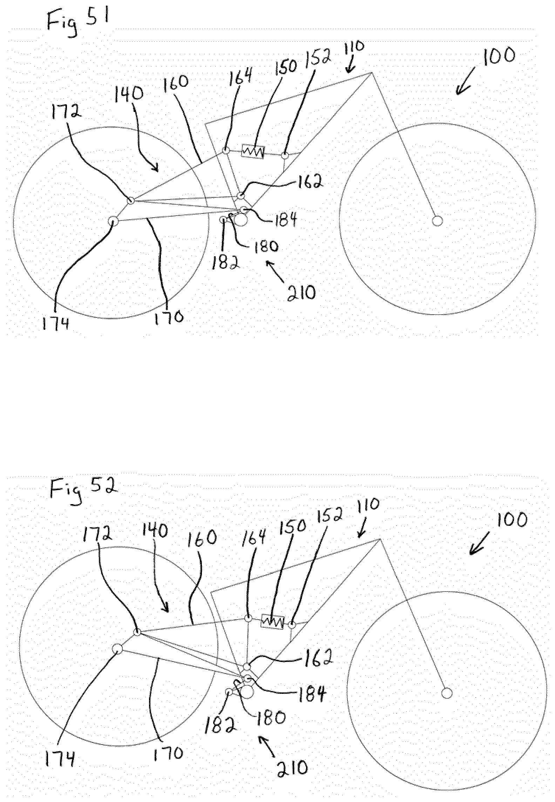

Figure 51 is a schematic right-side elevation view of an embodiment of the present invention having a link with the link in the counter-clockwise pivoting configuration, shown in the un-loaded "at rest" position.

Figure 52 is a schematic right-side elevation view of the embodiment of Figure 51, shown in a compressed position.

### Detailed Description with Reference to the Drawings

In the drawings, bicycle embodiments are shown viewed from the right side. Related to this, movement of components is generally described herein as if viewed from the right side of the bicycle, for example, pivotal movement is at times described as "clockwise" or "counter-clockwise".

In the drawings, the schematic representations of the bicycle embodiments
show conventional bicycle features in a simplified manner that for current purposes ignores the possible variations in configurations and details of these features. For example, the schematic drawings do not indicate a feature corresponding to a head tube. Further, it is well known that modern materials perm it frame configurations considerably different from the simple "triangle" composed of tubes, suggested by the schematic representations.

In the drawings, there is shown a bicycle 100 including a frame 110. The frame 110 is schematically represented as having a seat tube 112, a top tube 114 and a down tube 116. A bottom bracket 118 is located at the juncture of the seat tube 112 and the down tube 116. Mounted to the frame 110 there are front forks 120, to which the front wheel 122 is mounted. The bicycle 100 includes a rear wheel 130, attached to the frame 110 via a rear suspension system
140.

The rear suspension system 140 includes: a shock absorber 150, mounted at its proximal end to the frame 110 at the frame-shock mount 152; a seat stay member 160, pivotally mounted to the frame 110 at the seat stay-frame pivot 162 and coupled to the shock absorber 150 at the seat stay-shock couple 164; a chain stay member 170, coupled to the seat stay member 160 at the seat stay-chain stay couple 172 and including a rear axle mount 174 at which the rear wheel 130 is attached; and a link 180, pivotally mounted to the frame 110 at the link-frame pivot 182 and coupled to the chain stay member 170 at the link-chain stay couple 184.

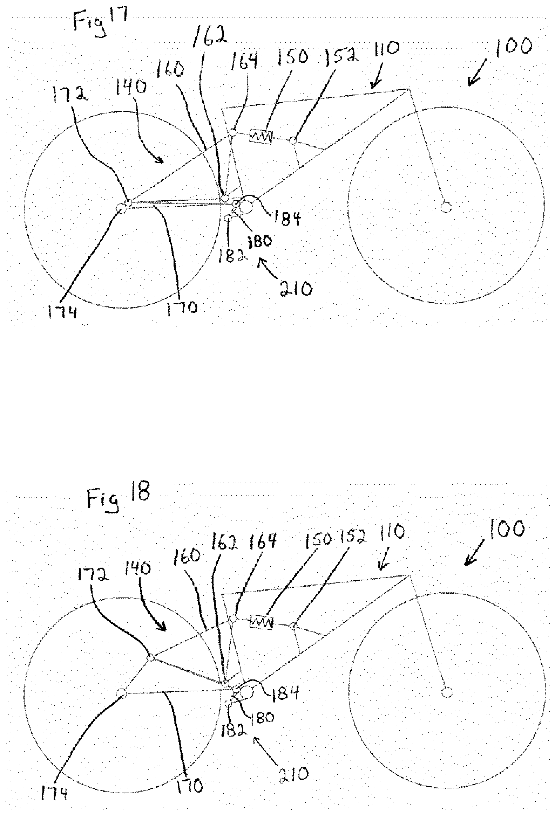

In general terms the embodiments shown in the drawings include two configurations for the link 180: a clockwise pivoting configuration 200 (as shown for example in Figure 1) in which the link 180 pivots relative to the frame 110 in a clockwise direction as the suspension is compressed; and a counter-clockwise pivoting configuration 210 (as shown for example in Figure 17) in which the link 180 pivots relative to the frame 110 in a counter-clockwise direction as the suspension is compressed.

The present invention encompasses many different configurations and embodiments.

The following approaches are used herein for providing numerical information for the position of components and pivots/couples with respect to a typical bicycle wheel size (i.e., 26" wheels) with the bicycle not loaded (i.e., with the suspension system at its uncompressed "at-rest" position) and with a flat surface supporting both wheels of the bicycle:
1. an X,Y coordinate system with the X axis parallel to the flat surface, with the intersection of the X axis and Y axis aligned with the axis of rotation within the bottom bracket, and with the units in millimetres; and
2. a combination of radial distances and angles, with the radial distances in millimetres from the axis of rotation of the rear wheel, and the angles as at the axis of rotation of the rear wheel measured from a line extending forward from the axis of rotation of the rear wheel parallel to the flat surface.

In what follows, negative X values for the pivot locations are generally bounded by the radius of the rear wheel 130. However, it is understood that it may be possible to have pivot and couple locations that intrude into the radius of the rear wheel. For example, the seat stay-frame pivot 162 could be defined by two aligned components, one on each side of the rear wheel 130.

For a clockwise pivoting configuration 200: the link-frame pivot 182 may be located with X between about -90 and 120 mm and Y between about -60 and 120 mm; and the link-chain stay couple 184 may be located with X between about -90 and 40 mm and Y between about -110 and 70 mm.

For a counter-clockwise pivoting configuration 210: the link-frame pivot 182 may be located with X between about-90 and 80 mm and Y between about-90 and 80 mm; and the link-chain stay couple 184 may be located with X between about -65 and 100 mm and Y between about-75 and 75 mm.

For either the clockwise pivoting configuration 200 or the counter-clockwise pivoting configuration 210:
1. the seat stay-frame pivot 162 may be located with X between about -100 and 190 and Y between about 10 and 160; and more preferably with X between about -80 and 150 and Y between about 40 and 100; and
2. the seat stay-chain stay couple 172 may be located at a radial distance of from about 30 and 200mm or more preferably from about 50 and 150mm; and at an angle of from about 45 degrees to 135 degrees, or more preferably from about 45 degrees to 100 degrees, or more preferably from about 45 to 78 degrees.

It is understood that locating the seat stay-chain stay couple 172 at an angle of about 78 degrees produces the greatest reduction in chainstay lengthening, but this angle may not be ideal for any particular configuration in view of other design considerations. For example, as a general rule, the closer the angle of the location of the seat stay-chain stay couple 172 is to 45 degrees, the smaller the "triangle" defined by the seat stay-chain stay couple 172, the rear axle mount 174 and the link-chain stay couple 184 may be, and thus the smaller (and thus the lighter or the less flexible) the chain stay member 170 may be. Similar considerations apply with respect to the size, weight and flexibility, of the seat stay member 160.
Figures 1 - 16 show examples of the clockwise pivoting configuration 200 in which the link-frame pivot 182 is located with X at about -36 and Y at about 10; and the link-chain stay couple 184 is located with X at about -67 and Y at about -65.
   In Figure 1, the seat stay-frame pivot 162 is located with X at about -70 and Y at about 28; and the seat stay-chain stay couple 172 at about 45 degrees and about 30mm.
   In Figure 2, the seat stay-frame pivot 162 is located with X at about -70 and Y at about 28; and the seat stay-chain stay couple 172 at about 45 degrees and about 150mm.
   In Figure 3, the seat stay-frame pivot 162 is located with X at about -70 and Y at about 28, and the seat stay-chain stay couple 172 at about 135 degrees and about 150mm.
   In Figure 4, the seat stay-frame pivot 162 is located with X at about -70 and Y at about 28, and the seat stay-chain stay couple 172 at about 135 degrees and about 30mm.

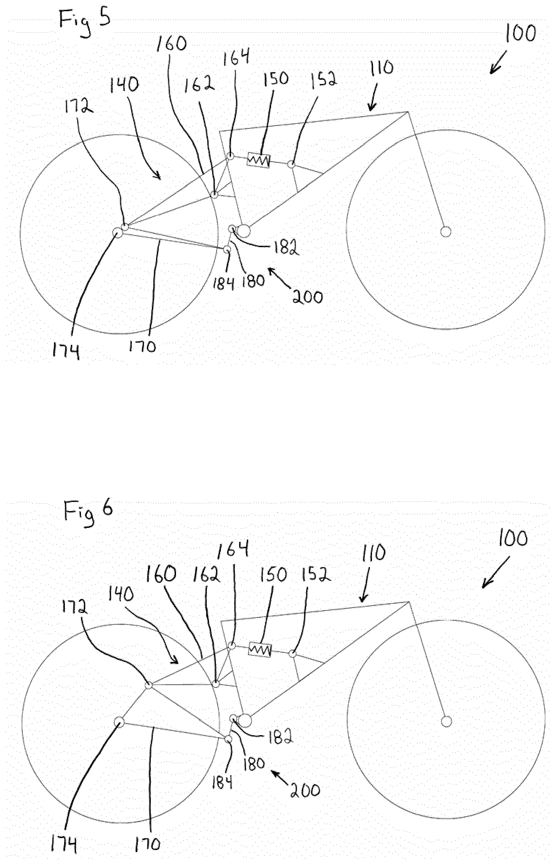

   In Figure 5, the seat stay-frame pivot 162 is located with X at about -90 and Y at about 125, and the seat stay-chain stay couple 172 at about 45 degrees and about 30mm.
   In Figure 6, the seat stay-frame pivot 162 is located with X at about -90 and Y at about 125, and the seat stay-chain stay couple 172 at about 45 degrees and about 150mm.

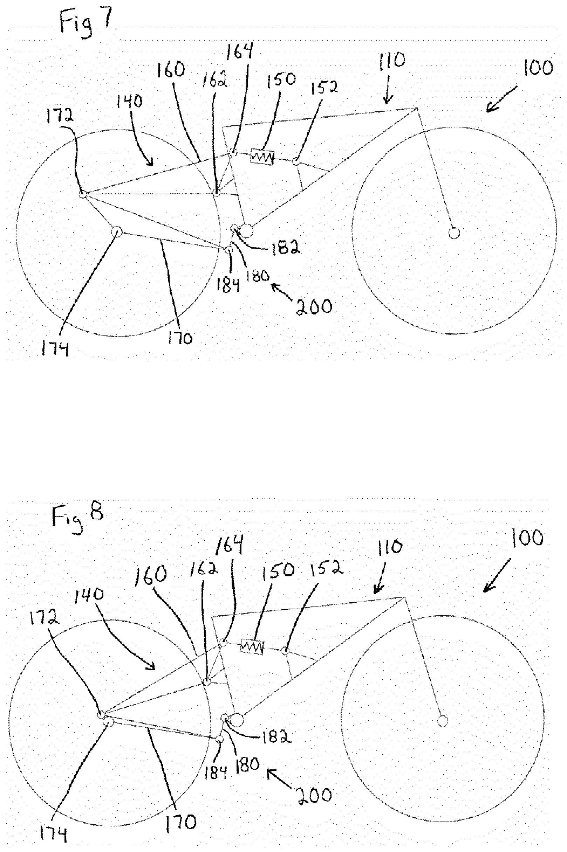

   In Figure 7, the seat stay-frame pivot 162 is located with X at about -90 and Y at about 125, and the seat stay-chain stay couple 172 at about 135 degrees and about 150 mm.
   In Figure 8, the seat stay-frame pivot 162 is located with X at about -90 and Y at about 125, and the seat stay-chain stay couple 172 at about 135 degrees and about 30mm.

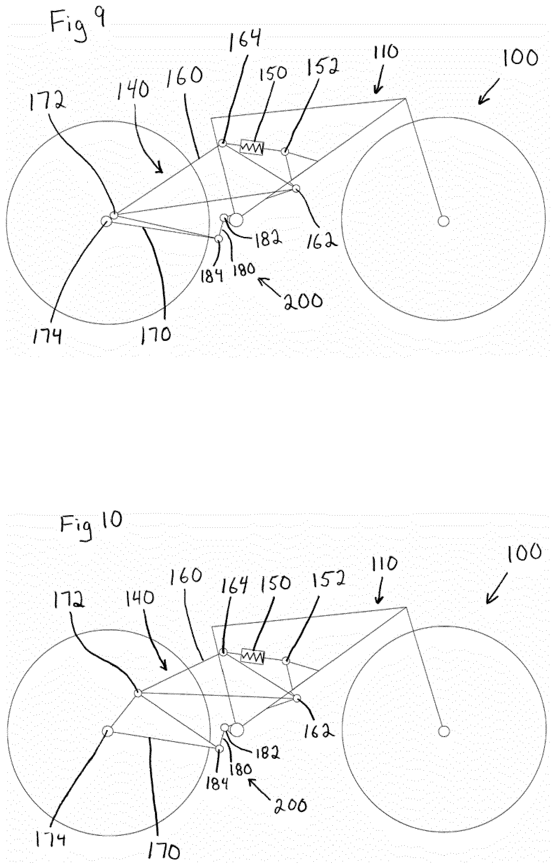

   In Figure 9, the seat stay-frame pivot 162 is located with X at about 150 and Y at about 115, and the seat stay-chain stay couple 172 at about45 degrees and about 30mm.
   In Figure 10, the seat stay-frame pivot 162 is located with X at about 150 and Y at about 115, and the seat stay-chain stay couple 172 at about 45 degrees and about 150mm.

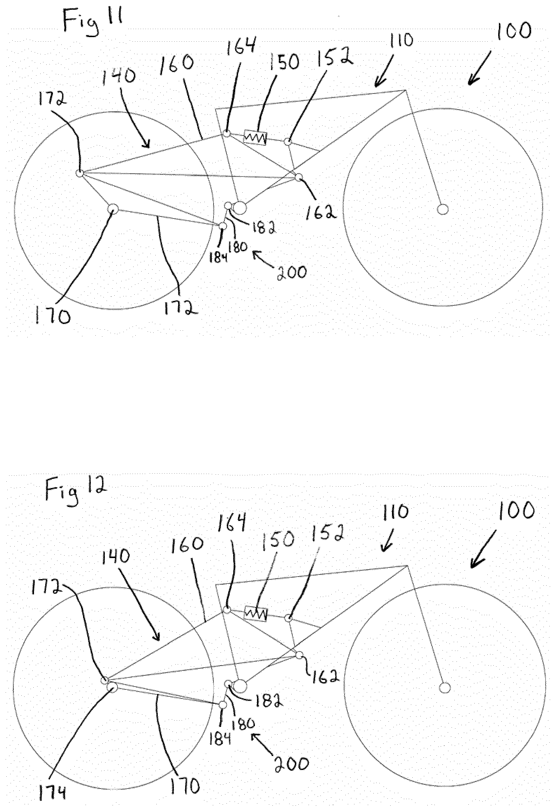

   In Figure 11, the seat stay-frame pivot 162 is located with X at about 150 and Y at about 115, and the seat stay-chain stay couple 172 at about 135 degrees and about 150mm.
   In Figure 12, the seat stay-frame pivot 162 is located with X at about 150 and Y at about 115, and the seat stay-chain stay couple 172 at about 135 degrees and about 30mm.

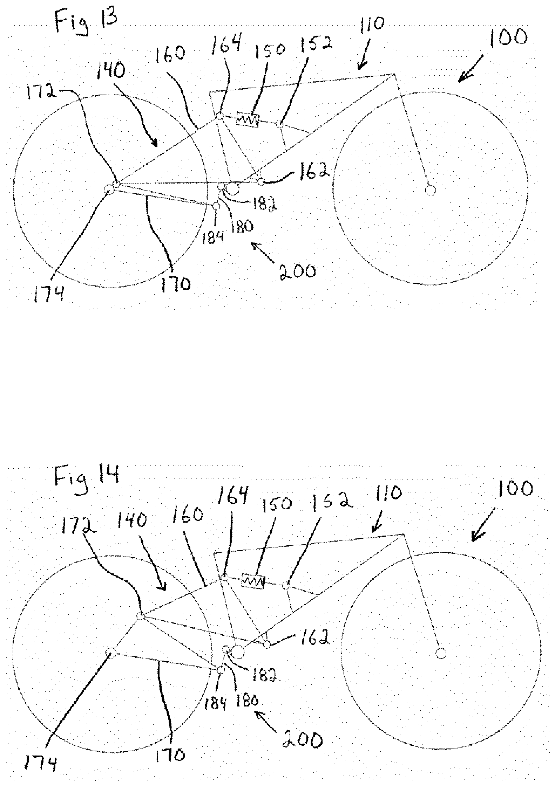

   In Figure 13, the seat stay-frame pivot 162 is located with X at about 85 and Y at about 12, and the seat stay-chain stay couple 172 at about 45 degrees and about 30mm.
   In Figure 14, the seat stay-frame pivot 162 is located with X at about 85 and Y at about 12, and the seat stay-chain stay couple 172 at about 45 degrees and about 150mm.

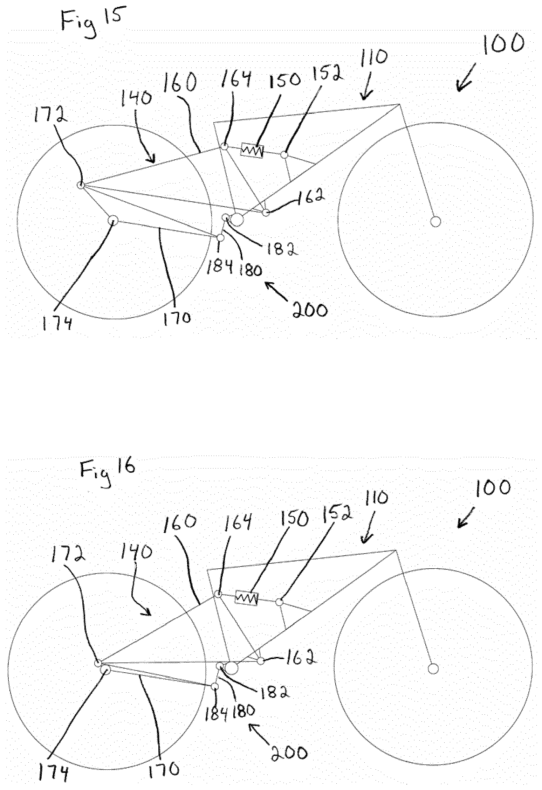

   In Figure 15, the seat stay-frame pivot 162 is located with X at about 85 and Y at about 12, and the seat stay-chain stay couple 172 at about 135 degrees and about 150mm.
   In Figure 16, the seat stay-frame pivot 162 is located with X at about 85 and Y at about 12, and the seat stay-chain stay couple 172 at about 135 degrees and about 30mm
Figures 17 - 32 show examples of the counter-clockwise pivoting configuration 210 in which the link-frame pivot 182 is located with X at about -70 and Y at about -40; and the link-chain stay couple 184 is located with X at about -30 and Y at about 10.
   In Figure 17, the seat stay-frame pivot 162 is located with X at about -70 and Y at about 28; and the seat stay-chain stay couple 172 at about 45 degrees and about 30mm.
   In Figure 18, the seat stay-frame pivot 162 is located with X at about -70 and Y at about 28; and the seat stay-chain stay couple172 at about 45 degrees and about 150mm.

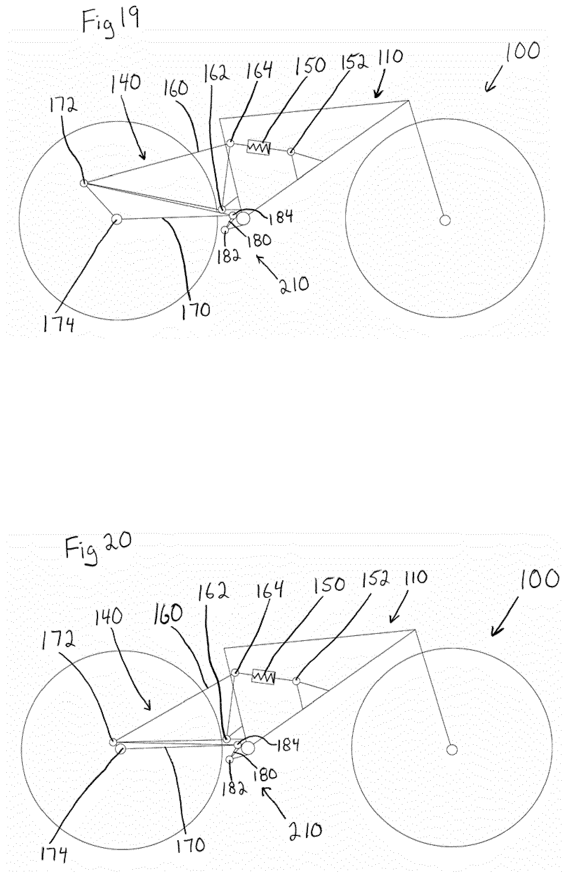

   In Figure 19, the seat stay-frame pivot 162 is located with X at about -70 and Y at about 28, and the seat stay-chain stay couple 172 at about 135 degrees and about 150mm.
   In Figure 20, the seat stay-frame pivot 162 is located with X at about -70 and Y at about 28, and the seat stay-chain stay couple 172 at about 135 degrees and about 30mm.

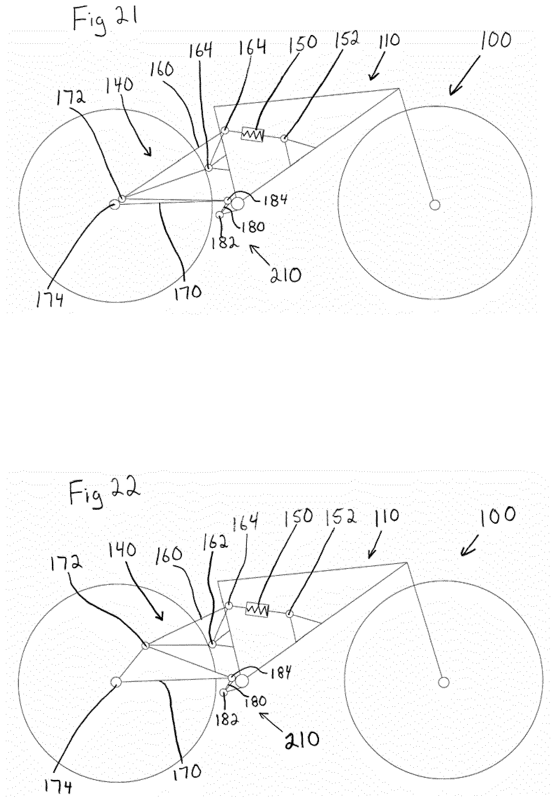

   In Figure 21, the seat stay-frame pivot 162 is located with X at about -90 and Y at about 125, and the seat stay-chain stay couple 172 at about 45 degrees and about 30mm.
   In Figure 22, the seat stay-frame pivot 162 is located with X at about -90 and Y at about 125, and the seat stay-chain stay couple 172 at about 45 degrees and about 150mm.

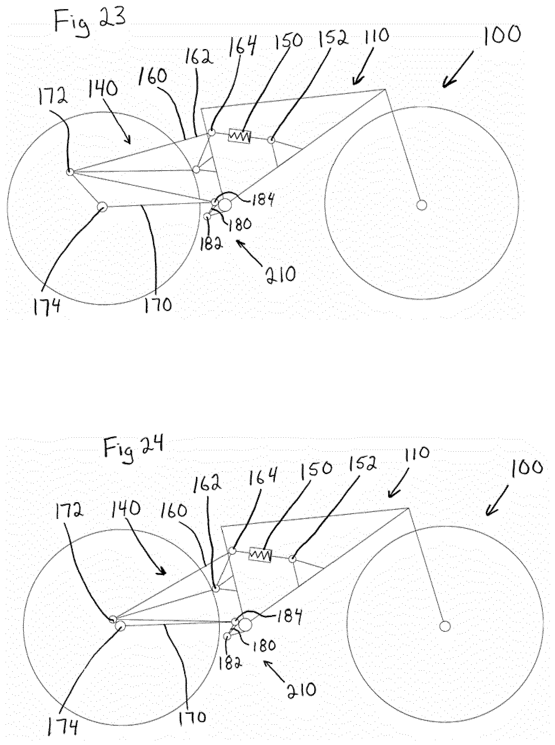

   In Figure 23, the seat stay-frame pivot 162 is located with X at about -90 and Y at about 125, and the seat stay-chain stay couple 172 at about 135 degrees and about 150 mm.
   In Figure 24, the seat stay-frame pivot 162 is located with X at about-90 and Y at about 125, and the seat stay-chain stay couple 172 at about 135 degrees and about 30mm.

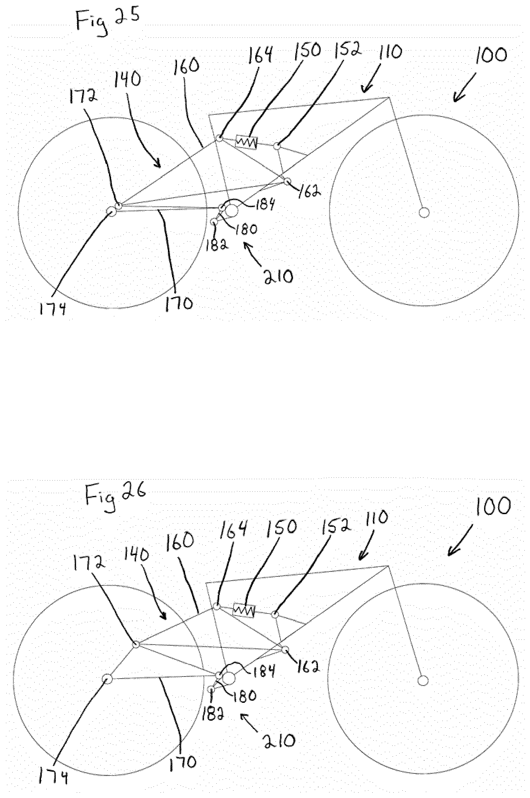

   In Figure 25, the seat stay-frame pivot 162 is located with X at about 150 and Y at about 115, and the seat stay-chain stay couple 172 at about 45 degrees and about 30mm.
   In Figure 26, the seat stay-frame pivot 162 is located with X at about 150 and Y at about 115, and the seat stay-chain stay couple 172 at about 45 degrees and about 150mm.

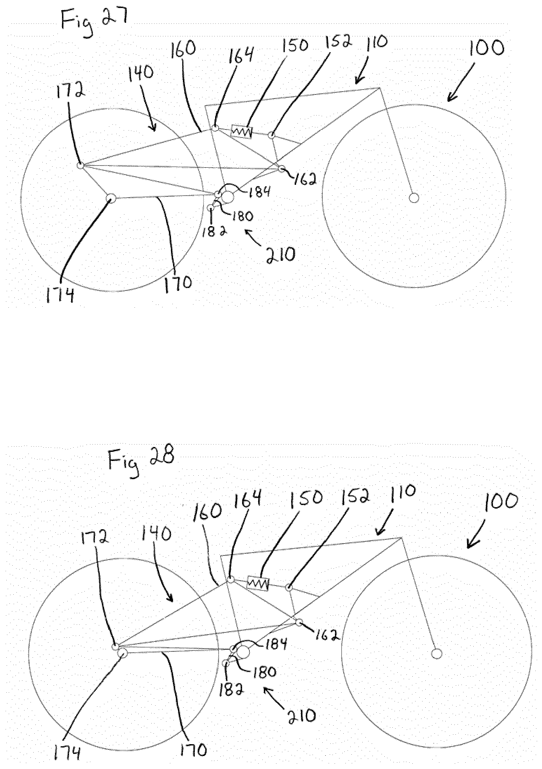

   In Figure 27, the seat stay-frame pivot 162 is located with X at about 150 and Y at about 115, and the seat stay-chain stay couple 172 at about 135 degrees and about 150mm.
   In Figure 28, the seat stay-frame pivot 162 is located with X at about 150 and Y at about 115, and the seat stay-chain stay couple 172 at about 135 degrees and about 30mm.

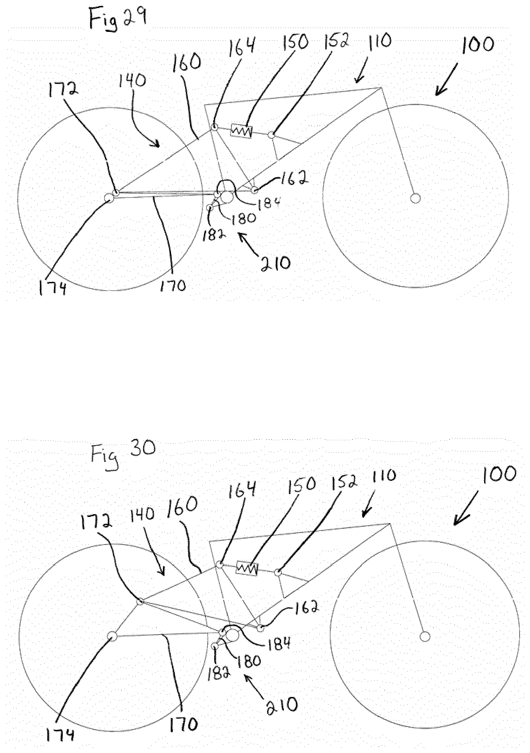

   In Figure 29, the seat stay-frame pivot 162 is located with X at about 85 and Y at about 12, and the seat stay-chain stay couple 172 at about 45 degrees and about 30mm.
   In Figure 30, the seat stay-frame pivot 162 is located with X at about 85 and Y at about 12, and the seat stay-chain stay couple 172 at about 45 degrees and about 150mm.

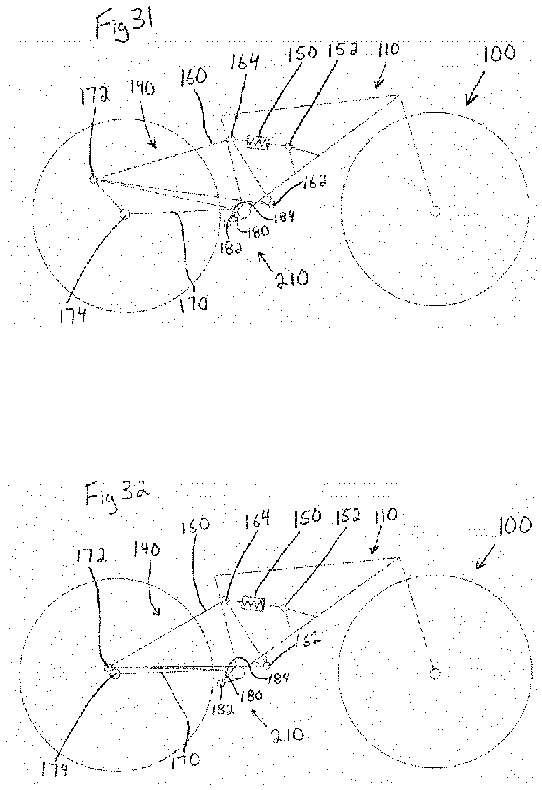

   In Figure 31, the seat stay-frame pivot 162 is located with X at about 85 and Y at about 12, and the seat stay-chain stay couple 172 at about 135 degrees and about 150mm.
   In Figure 32, the seat stay-frame pivot 162 is located with X at about 85 and Y at about 12, and the seat stay-chain stay couple 172 at about 135 degrees and about 30mm

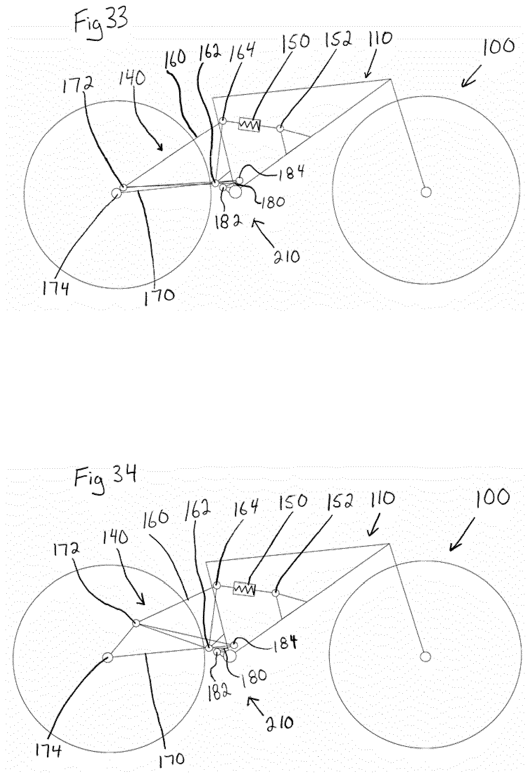

Figures 33 - 48 show examples of the counter-clockwise pivoting configuration 210 in which the link-frame pivot 182 is located with X at about -53 and Y at about 14; and the link-chain stay couple 184 is located with X at about 15 and Y at about 47.
   In Figure 33, the seat stay-frame pivot 162 is located with X at about -70 and Y at about 28; and the seat stay-chain stay couple 172 at about 45 degrees and about 30mm.
   In Figure 34, the seat stay-frame pivot 162 is located with X at about-70 and Y at about 28; and the seat stay-chain stay couple 172 at about 45 degrees and about 150mm.

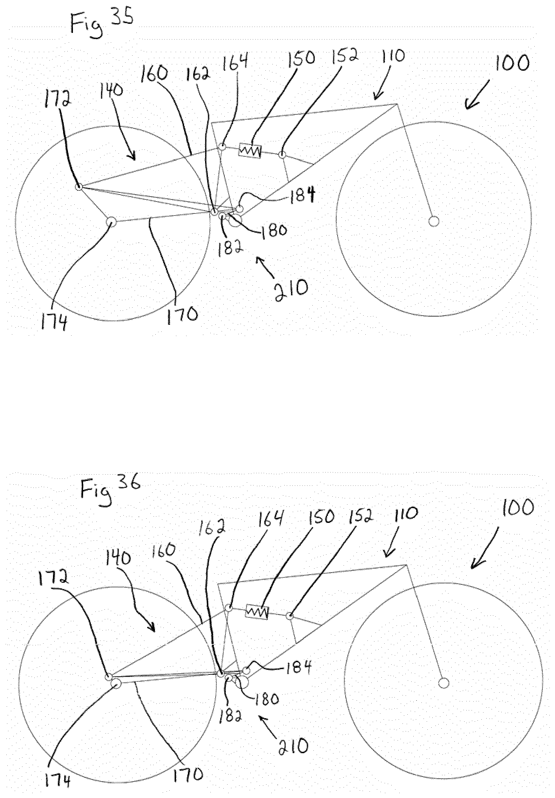

   In Figure 35, the seat stay-frame pivot 162 is located with X at about -70 and Y at about 28, and the seat stay-chain stay couple 172 at about 135 degrees and about 150mm.
   In Figure 36, the seat stay-frame pivot 162 is located with X at about -70 and Y at about 28, and the seat stay-chain stay couple 172 at about 135 degrees and about 30mm.

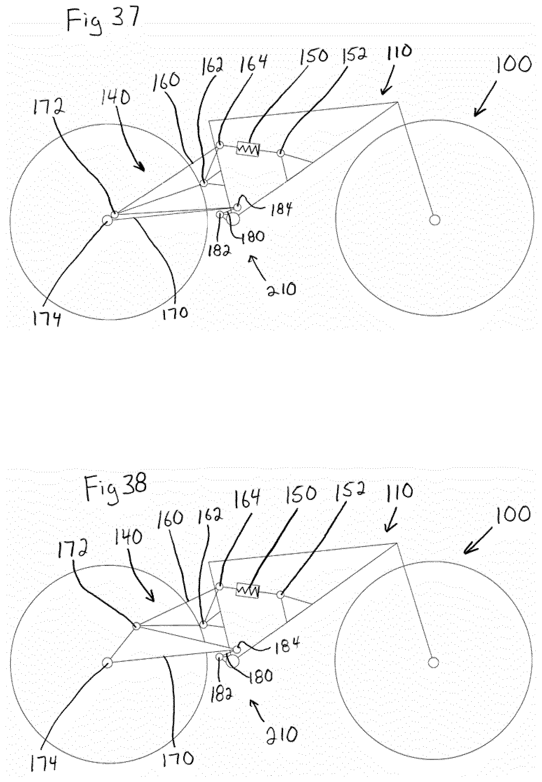

   In Figure 37, the seat stay-frame pivot 162 is located with X at about -90 and Y at about 125, and the seat stay-chain stay couple 172 at about 45 degrees and about 30mm.
   In Figure 38, the seat stay-frame pivot 162 is located with X at about -90 and Y at about 125, and the seat stay-chain stay couple 172 at about 45 degrees and about 150mm.

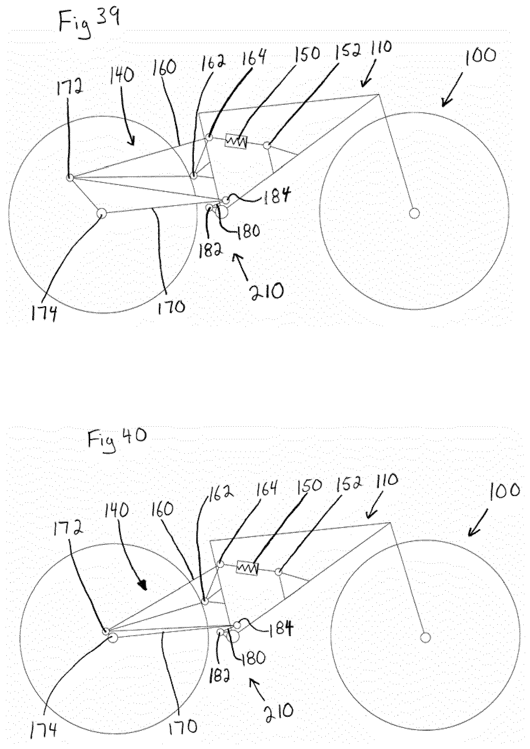

   In Figure 39, the seat stay-frame pivot 162 is located with X at about -90 and Y at about 125, and the seat stay-chain stay couple 172 at about 135 degrees and about 150 mm.
   In Figure 40, the seat stay-frame pivot 162 is located with X at about -90 and Y at about 125, and the seat stay-chain stay couple 172 at about 135 degrees and about 30mm.

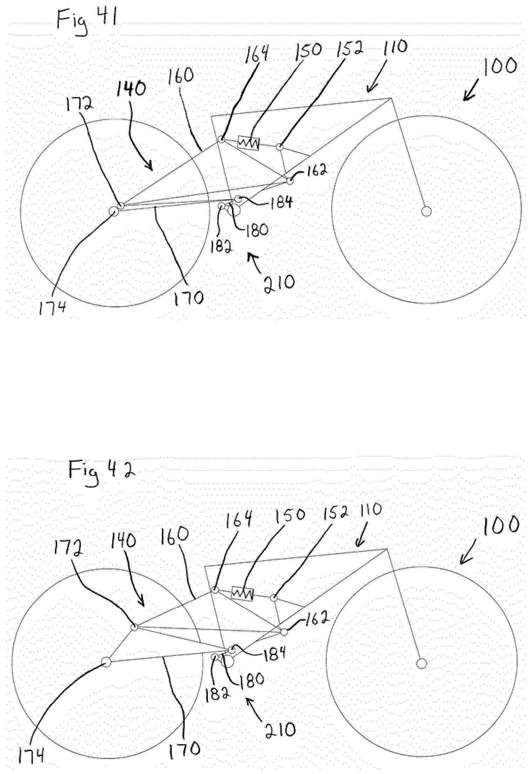

   In Figure 41, the seat stay-frame pivot 162 is located with X at about 150 and Y at about 115, and the seat stay-chain stay couple 172 at about 45 degrees and about 30mm.
   In Figure 42, the seat stay-frame pivot 162 is located with X at about 150 and Y at about 115, and the seat stay-chain stay couple 172 at about 45 degrees and about 150mm.

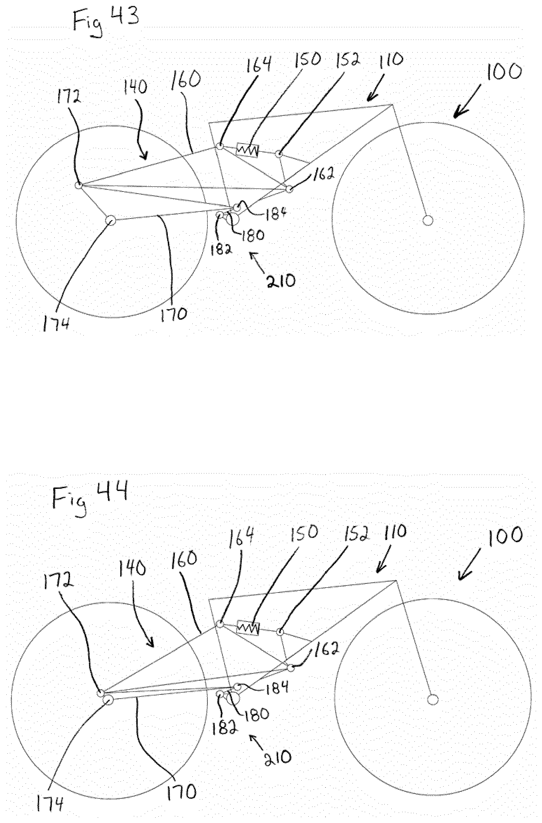

   In Figure 43, the seat stay-frame pivot 162 is located with X at about 150 and Y at about 115, and the seat stay-chain stay couple 172 at about 135 degrees and about 150mm.
   In Figure 44, the seat stay-frame pivot 162 is located with X at about 150 and Y at about 115, and the seat stay-chain stay couple 172 at about 135 degrees and about 30mm.

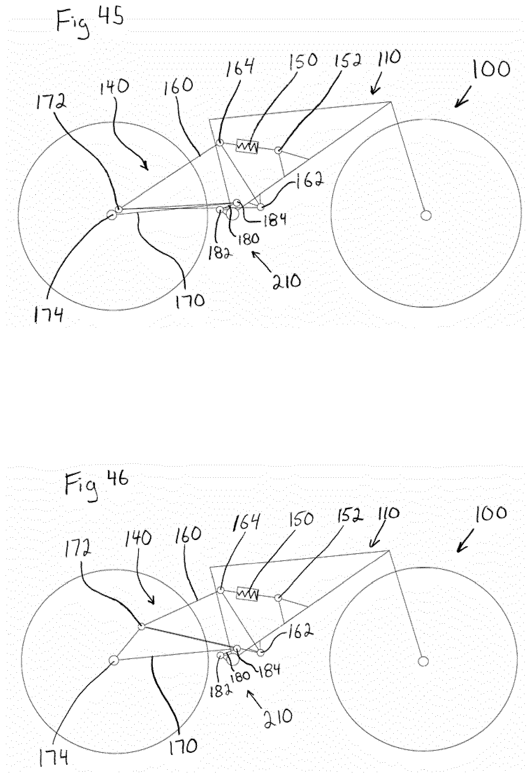

   In Figure 45, the seat stay-frame pivot 162 is located with X at about 85 and Y at about 12, and the seat stay-chain stay couple 172 at about 45 degrees and about 30mm.
   In Figure 46, the seat stay-frame pivot 162 is located with X at about 85 and Y at about 12, and the seat stay-chain stay couple 172 at about 45 degrees and about 150mm.

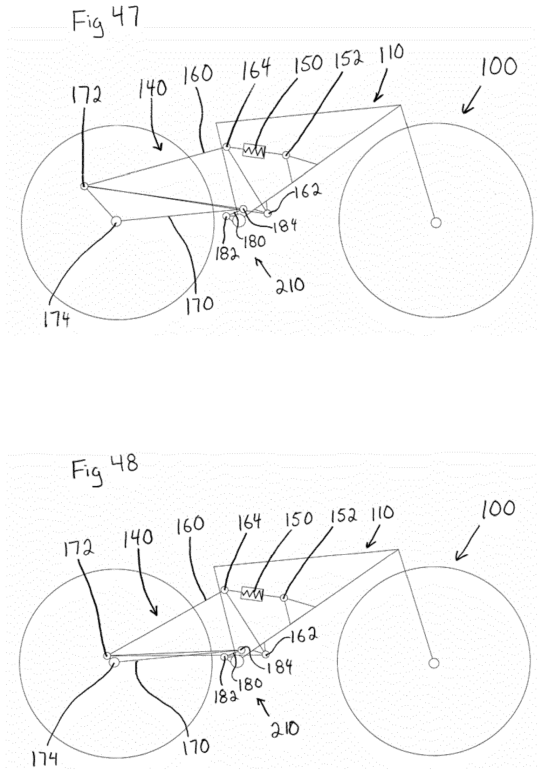

   In Figure 47, the seat stay-frame pivot 162 is located with X at about 85 and Y at about 12, and the seat stay-chain stay couple 172 at about 135 degrees and about 150mm.
   In Figure 48, the seat stay-frame pivot 162 is located with X at about 85 and Y at about 12, and the seat stay-chain stay couple 172 at about 135 degrees and about 30mm

To illustrate how the components move relative to each other in use, a clockwise pivoting configuration 200 is shown in the un-loaded "at rest" position in Figure 49 and in a compressed position in Figure 50;and a counter-clockwise pivoting configuration 210 is shown in the unloaded "at rest" position in Figure 51 and in a compressed position in Figure 52.

As can be seen in Figures 49 - 52, the location of the seat stay-chain stay couple 172 above the rear axle mount 174 in conjunction allow the axle of the rear wheel 130 to move forward under compression (reducing the amount of chainstay lengthening), while also permitting a location for the seat stay-frame pivot 162 that provides desirable anti-squat characteristics.

The function of the link 180 is essentially to support the link-chain stay couple 184 end of the chain stay member 170, and to restrict the movement of the link-chain stay couple 184 end of the chain stay member 170 to a defined path encompassing an unloaded at-rest position and a full-compression position. The possible configuration of the link 180 location is highly variable. To a significant extent, the configuration of the link 180 may be used by the suspension designer to "tune" the suspension characteristics.

The functions performed by the link 180 in the embodiments shown in the drawings may be performed by other means. For example, the link-chain stay couple 184 end of the chain stay member 170 could be configured to engage a longitudinally extending slot in, for example, a plate (or aligned slots in two or more plates) affixed to the frame, with the slot (or slots) defining the path of movement of link-chain stay couple 184 end of the chain stay member 170. As a further example, the functions performed by the link 180 could be obtained via a configuration involving a rotating eccentric arrangement.

It is understood that although many different embodiments of the present invention are useful in different applications, in terms of anti-squat characteristics for mountain bikes, it is desirable to locate the seat stay-frame pivot 162 and the seat stay-chain stay couple 172 such that a line passing through the axes of rotation of the seat stay-frame pivot 162 and the seat stay-chain stay couple 172 is oriented so as to continue to the near vicinity of the top of the particular chainring (i.e., front sprocket) for which the user wishes to optimize the suspension, being at the top of the chainring or within plus or minus 15% of the radius of the chainring. This configuration is understood to provide desired anti-squat characteristics and, as compared to other possible configurations, a more compact suspension system, resulting in less flex.

Suspension system designers implementing the present invention will presumably be aware that the sort of high mechanical anti-squat properties readily obtainable through embodiments of the present invention are not in all implementations desirably the sole means for achieving pedalling efficiency. In certain gear combinations, high mechanical anti-squat combined with high pedalling efforts (for example, when standing on the pedals when climbing a hill in the small front chainring and smaller rear cogs) may cause a suspension to extend and/or "lock out". Thus it is often desirable to use a combination of a slight rearward axle path, "enough" mechanical anti-squat, and shock leverage ratios to achieve good overall pedalling efficiency. Excessive reliance on any one of these may cause undesired effects in certain circumstances.

It is understood that minor adjustments to pivot and couple locations may cause significant changes in suspension performance characteristics. Adjusting the link-frame pivot 182 and link-chain stay couple 184 locations also requires adjustment to the locations of the seat stay-frame pivot 162 and seat stay-chain stay couple 172 to find an optimal configuration.

For example, a "high" seat stay-frame pivot 162 location would typically require a seat stay-chain stay couple 172 location further from (higher above) the rear axle to enable acceptable rear suspension characteristics (resulting in longer suspension components which would introduce flex into the system, or larger and heavier components). There may be some situations where using "high" pivot and couple locations is desirable, despite the presumed disadvantages of flex and/or weight.

Determining the locations of the seat stay-frame pivot 162 and the seat stay-chain stay couple 172 effectively forces "proper" location of the link-frame pivot 182 and link-chain stay couple 184. One approach to designing a bicycle embodiment of the present invention is to think of the seat stay member 160 as the "control member", and the link 180 as the "modifier link", wherein, the "control member" (i.e., the locations of the seat stay-frame pivot 162 and the seat stay-chain stay couple 172) dictates overall characteristics, and the "modifier link" (i.e., the locations of the link-frame pivot 182 and the link-chain stay couple 184) fine tunes specific performance characteristics.

In the embodiments described above and shown in the drawings, the shock absorber 150 is mounted at its proximal end to the frame 110 and coupled at its distal end to the seat stay member 160. To be clear, multiple other configurations of the shock absorber 150 are possible. For example, the shock absorber 150 could be interconnected between other components (for example, between the link 180 and the frame 110). As well, the shock absorber 150 need not be directly connected to a component, in that there may be intervening connectors or linkages between the shock absorber 150 and another component. Various configurations and arrangements for devices for absorbing shocks are known in the art. For example, in some cases, particularly in long travel downhill designs, it may be advantageous to use a linkage (not shown) between the shock absorber 150 and the seat stay member 160 so as to permit adjustments or specific shock rates not readily achievable when the shock absorber 150 is directly coupled to the seat stay member 160.

Advantageously, embodiments of the present invention may be readily configured so as to avoid interfering with a "standard" front derailleur mounting position/location.

## Claims

1. A bicycle (100) comprising:
a front wheel (122);
a rear wheel (130) with a rear wheel axis of rotation;
a bicycle frame (110) having a right side, being on the right hand side when the bicycle frame (110) is viewed from the rear, and having a bottom bracket (118) with a bottom bracket axis of rotation;
front forks (120) mounted to the bicycle frame (110), to which the front wheel (122) is mounted; and
a suspension system (140) that attaches the rear wheel (130) to the bicycle frame (110), so as to permit relative movement as between the rear wheel (130) and the bicycle frame (110), the suspension system (140) comprising:
a seat stay member (160) directly pivotally attached at a pivotal attachment (162) to the bicycle frame (110);
a pivotal axis of the pivotal attachment (162) being located, in terms of an X,Y coordinate system when viewed from the right side of the bicycle frame (110), with the X axis parallel to an imaginary flat surface supporting a front 26" wheel (122) and a rear 26" wheel (130) of the bicycle (100) with the bicycle (100) not loaded and with the intersection of the X axis and Y axis aligned with the bottom bracket axis of rotation, with X between about -80 mm and about 150 mm;
a chain stay member (170) having:
a mount (174) suitable for receiving a rear wheel axle;
a couple (172) pivotally coupled to the seat stay member (160) at a location upward of the rear wheel axis of rotation, wherein the location of the pivot axis of the couple (172) is at an angle measured at the rear wheel axis of rotation and from an imaginary line extending forward from the rear wheel axis of rotation parallel to the imaginary flat surface supporting the front 26" wheel (122) and the rear 26" wheel (130) of the bicycle (100) with the bicycle (100) not loaded, wherein the angle is about 45 degrees to about 135 degrees, and
a frame-ward end;
a frame-ward end movement control device, being a link (180) member pivotally attached at a link pivotal attachment (182) to the bicycle frame (110) and pivotally coupled at a link pivotal coupling (184) to the frame-ward end, for supporting the frame-ward end relative to the bicycle frame (110) and for defining a path of permitted movement of the frame-ward end relative to the bicycle frame (110); and
a shock absorber device (150) directly or indirectly interconnected between two of the seat stay member (160), the chain stay member (170), the frame-ward end movement control device and the bicycle frame (110), for, when in use, resiliently impeding relative movement of the components from an at-rest position; and
**characterised in that**
the pivotal axis of the pivotal attachment (162) is located with Y between about 40 mm and about 100 mm.

2. The bicycle (100) of claim 1, wherein the angle is about 45 degrees to about 100 degrees.

3. The bicycle (100) of claim 1, wherein the angle is about 45 degrees to about 78 degrees.

4. The bicycle (100) of claim 1, wherein the location of the pivot axis of the couple (172) for pivotally coupling to the seat stay member (160) is at a radial distance from the rear wheel axis of rotation of about 30 mm to about 200 mm.

5. The bicycle (100) of claim 4, wherein the radial distance is about 50 mm to about 150 mm.

6. The bicycle (100) of claim 1, wherein, in terms of the X,Y coordinate system, the location of the pivot axis of the link pivotal attachment (182) to the bicycle frame (110) is with X between about -90 mm and about 120 mm, and Y between about -60 mm and about 120 mm; and the location of the pivot axis of the link pivotal coupling (184) to the frame-ward end is with X between about -90 mm and about 40 mm and Y between about -110 mm and about 70 mm.

7. The bicycle (100) of claim 1, wherein, in terms of the X,Y coordinate system, the location of the pivot axis of the link pivotal attachment (182) to the bicycle frame (110) is with X between about -90 mm and about 80 mm and Y between about -90 mm and about 80 mm; and the location of the pivot axis of the link pivotal coupling (184) to the frame-ward end is with X between about -65 and about 100 mm, and Y between about -75 mm and about 75 mm.

8. The bicycle (100) of claim 1, wherein the shock absorber device (150) is interconnected between the seat stay member (160) and the bicycle frame (110).

## Patentansprüche

1. Fahrrad (100), das Folgendes umfasst:
ein Vorderrad (122);
ein Hinterrad (130) mit einer hinteren Raddrehachse;
einen Fahrradrahmen (110) mit einer rechten Seite, die auf der rechten Seite ist, wenn der Fahrradrahmen (110) von hinten betrachtet wird, und mit einem Tretlager (118) mit einer Tretlagerdrehachse;
Vordergabeln (120), montiert am Fahrradrahmen (110), an denen das Vorderrad (122) montiert ist; und
ein Aufhängungssystem (140), das das Hinterrad (130) am Fahrradrahmen (110) befestigt, um relative Bewegung wie zwischen dem Hinterrad (130) und dem Fahrradrahmen (110) zu ermöglichen, wobei das Aufhängungssystem (140) Folgendes umfasst:
ein Sitzstrebenelement (160), das direkt schwenkbar an einer Schwenkbefestigungsvorrichtung (162) am Fahrradrahmen (110) befestigt ist;
wobei eine Schwenkachse der Schwenkbefestigungsvorrichtung (162), bezüglich eines XY-Koordinatensystems, wenn von der rechten Seite des Fahrradrahmens (110) betrachtet, so liegt, dass die X-Achse parallel zu einer imaginären flachen Fläche ist, die ein 26"-Vorderrad (122) und ein 26"-Hinterrad (130) des Fahrrads (100) trägt, wobei das Fahrrad (100) nicht beladen ist und der Schnittpunkt der X-Achse und der Y-Achse mit der Tretlagerdrehachse ausgerichtet ist, wobei X zwischen etwa -80 mm und etwa 150 mm ist;
ein Kettenstrebenelement (170), Folgendes aufweisend:
eine Aufnahme (174), geeignet zum Aufnehmen einer Hinterradachse;
eine Kopplung (172), an einem Ort oberhalb der Hinterraddrehachse schwenkbar mit dem Sitzstrebenelement (160) gekoppelt, wobei der Ort der Schwenkachse der Kopplung (172) bei einem Winkel ist, der an der Hinterraddrehachse und von einer imaginären Linie aus gemessen wird, die sich von der Hinterraddrehachse nach vorn, parallel zu der imaginären flachen Fläche, die das 26"-Vorderrad (122) und das 26"-Hinterrad (130) des Fahrrads (100) trägt, wobei das Fahrrad (100) nicht beladen ist, erstreckt, wobei der Winkel etwa 45 Grad bis etwa 135 Grad ist, und
ein rahmenwärtiges Ende;
eine Bewegungssteuerungsvorrichtung für das rahmenwärtige Ende, die ein Gelenkelement (180) ist, das schwenkbar an einer Gelenkschwenkbefestigungsvorrichtung (182) am Fahrradrahmen (110) befestigt ist und schwenkbar an einer Gelenkschwenkkopplung (184) mit dem rahmenwärtigen Ende gekoppelt ist, zum Unterstützen des rahmenwärtigen Endes bezüglich des Fahrradrahmens (110) und zum Definieren eines Pfades von zulässiger Bewegung des rahmenwärtigen Endes bezüglich des Fahrradrahmens (110); und
eine Stoßdämpfervorrichtung (150), direkt oder indirekt zwischen zwei aus dem Sitzstrebenelement (160), dem Kettenstrebenelement (170), der Bewegungssteuerungsvorrichtung für das rahmenwärtige Ende und dem Fahrradrahmen (110) verbunden, um, bei Verwendung, relative Bewegung der Komponenten aus einer Ruheposition elastisch zu behindern; und
**dadurch gekennzeichnet, dass** sich die Schwenkachse der Schwenkbefestigungsvorrichtung (162) bei Y zwischen etwa 40 mm und etwa 100 mm befindet.

2. Fahrrad (100) nach Anspruch 1, wobei der Winkel etwa 45 Grad bis etwa 100 Grad ist.

3. Fahrrad (100) nach Anspruch 1, wobei der Winkel etwa 45 Grad bis etwa 78 Grad ist.

4. Fahrrad (100) nach Anspruch 1, wobei der Ort der Schwenkachse der Kopplung (172) zum schwenkbaren Koppeln mit dem Sitzstrebenelement (160) bei einem radialen Abstand von der Hinterraddrehachse von etwa 30 mm bis etwa 200 mm ist.

5. Fahrrad (100) nach Anspruch 4, wobei der radiale Abstand etwa 50 mm bis etwa 150 mm ist.

6. Fahrrad (100) nach Anspruch 1, wobei, bezüglich des XY-Koordinatensystems, der Ort der Schwenkachse der Gelenkschwenkbefestigungsvorrichtung (182) am Fahrradrahmen (110) bei X zwischen etwa -90 mm und etwa 120 mm sowie Y zwischen etwa -60 mm und etwa 120 mm liegt; und wobei der Ort der Schwenkachse der Gelenkschwenkkopplung (184) mit dem rahmenwärtigen Ende bei X zwischen etwa - 90 mm und etwa 40 mm sowie Y zwischen etwa -110 mm und etwa 70 mm liegt.

7. Fahrrad (100) nach Anspruch 1, wobei, bezüglich des XY-Koordinatensystems, der Ort der Schwenkachse der Gelenkschwenkbefestigungsvorrichtung (182) am Fahrradrahmen (110) bei X zwischen etwa -90 mm und etwa 80 mm sowie Y zwischen etwa -90 mm und etwa 80 mm liegt; und wobei der Ort der Schwenkachse der Gelenkschwenkkopplung (184) mit dem rahmenwärtigen Ende bei X zwischen etwa - 65 und etwa 100 mm sowie Y zwischen etwa -75 mm und etwa 75 mm liegt.

8. Fahrrad (100) nach Anspruch 1, wobei die Stoßdämpfervorrichtung (150) zwischen dem Sitzstrebenelement (160) und dem Fahrradrahmen (110) verbunden ist.

## Revendications

1. Vélo (100) comprenant :
une roue avant (122) ;
une roue arrière (130) avec un axe de rotation de roue arrière ;
un cadre de vélo (110) ayant un côté droit, étant du côté droit lorsque le cadre de vélo (110) est vu de l'arrière, et ayant un pédalier (118) avec un axe de rotation de pédalier ;
des fourches avant (120) montées sur le cadre de vélo (110), sur lesquelles la roue avant (122) est montée ; et
un système de suspension (140) qui fixe la roue arrière (130) au cadre de vélo (110), de sorte à permettre un mouvement relatif entre la roue arrière (130) et le cadre de vélo (110),
le système de suspension (140) comprenant :
un élément de support de siège (160) directement fixé de manière pivotante au niveau d'un élément de fixation pivotant (162) au cadre de vélo (110) ;
un axe de pivotement de l'élément de fixation pivotant (162) étant situé, en termes de système de coordonnées X, Y tel que vu depuis le côté droit du cadre de vélo (110), avec l'axe X parallèle à une surface plane imaginaire supportant une roue avant de 26'' (122) et une roue arrière de 26'' (130) du vélo (100), avec le vélo (100) non chargé et avec l'intersection de l'axe X et de l'axe Y alignée avec l'axe de rotation du pédalier, avec X entre environ -80 mm et environ 150 mm ;
un élément de tendeur de chaîne (170) ayant :
un support (174) conçu pour recevoir un essieu de roue arrière ;
un couple (172) accouplé de manière pivotante à l'élément de support de siège (160) au niveau d'un emplacement situé vers le haut de l'axe de rotation de roue arrière, l'emplacement de l'axe de pivotement du couple (172) étant à un angle mesuré au niveau de l'axe de rotation de roue arrière et à partir d'une ligne imaginaire s'étendant vers l'avant à partir de l'axe de rotation de roue arrière parallèle à la surface plane imaginaire supportant la roue avant de 26'' (122) et la roue arrière de 26'' (130) du vélo (100) avec le vélo (100) non chargé, l'angle étant compris entre environ 45 degrés et environ 135 degrés, et
une extrémité en direction du cadre ;
un dispositif de commande de mouvement d'extrémité en direction du cadre, étant un élément de maillon (180) fixé de manière pivotante au niveau d'un élément de fixation pivotant de maillon (182) au cadre de vélo (110) et accouplé de manière pivotante au niveau d'un accouplement pivotant de maillon (184) à l'extrémité en direction du cadre, pour supporter l'extrémité en direction du cadre par rapport au cadre de vélo (110) et pour définir un chemin de mouvement autorisé de l'extrémité en direction du cadre par rapport au cadre de vélo (110) ; et
un dispositif amortisseur de chocs (150) interconnecté directement ou indirectement entre deux éléments parmi l'élément de support de siège (160), l'élément de tendeur de chaîne (170), le dispositif de commande de mouvement d'extrémité en direction du cadre et le cadre de vélo (110), pour, lors de l'utilisation, empêcher de manière élastique le mouvement relatif des composants à partir d'une position de repos ; et
**caractérisé en ce que**
l'axe de pivotement de l'élément de fixation pivotant (162) est situé avec Y entre environ 40 mm et environ 100 mm.

2. Vélo (100) selon la revendication 1, l'angle étant compris entre environ 45 degrés et environ 100 degrés.

3. Vélo (100) selon la revendication 1, l'angle étant compris entre environ 45 degrés et environ 78 degrés.

4. Vélo (100) selon la revendication 1, l'emplacement de l'axe de pivotement du couple (172) pour l'accouplement pivotant à l'élément de support de siège (160) étant à une distance radiale de l'axe de rotation de roue arrière comprise entre environ 30 mm et environ 200 mm.

5. Vélo (100) selon la revendication 4, la distance radiale étant comprise entre environ 50 mm et environ 150 mm.

6. Vélo (100) selon la revendication 1, en termes de système de coordonnées X, Y, l'emplacement de l'axe de pivotement de l'élément de fixation pivotant de maillon (182) au cadre de vélo (110) étant avec X entre environ -90 mm et environ 120 mm, et Y entre environ -60 mm et environ 120 mm ; et l'emplacement de l'axe de pivotement de l'accouplement pivotant de maillon (184) à l'extrémité en direction du cadre étant avec X entre environ -90 mm et environ 40 mm et Y entre environ -110 mm et environ 70 mm.

7. Vélo (100) selon la revendication 1, en termes de système de coordonnées X, Y, l'emplacement de l'axe de pivotement de l'élément de fixation pivotant de maillon (182) au cadre de vélo (110) étant avec X entre environ -90 mm et environ 80 mm, et Y entre environ -90 mm et environ 80 mm ; et l'emplacement de l'axe de pivotement de l'accouplement pivotant de maillon (184) à l'extrémité en direction du cadre étant avec X entre environ -65 et environ 100 mm et Y entre environ -75 mm et environ 75 mm.

8. Vélo (100) selon la revendication 1, le dispositif amortisseur de chocs (150) étant interconnecté entre l'élément de support de siège (160) et le cadre de vélo (110) .
